(19) Europäisches Patentamt
European Patent Office
Office européen des brevets

(11) **EP 3 255 477 B1**

(12) **EUROPEAN PATENT SPECIFICATION**

(45) Date of publication and mention
of the grant of the patent:
**18.06.2025  Bulletin 2025/25**

(21) Application number: **16746639.0**

(22) Date of filing: **02.02.2016**

(51) International Patent Classification (IPC):
**G02C 7/02** (2006.01)     **G02C 7/04** (2006.01)
**G02C 7/16** (2006.01)     **G02B 1/115** (2015.01)
**G02C 7/10** (2006.01)     **G02B 1/14** (2015.01)

(52) Cooperative Patent Classification (CPC):
**G02C 7/04; G02C 7/02; G02C 7/104; G02C 7/165**

(86) International application number:
**PCT/JP2016/053110**

(87) International publication number:
**WO 2016/125808 (11.08.2016 Gazette 2016/32)**

(54) **ACCOMMODATION ASSISTING LENS**

AKKOMMODATIONSHILFSLINSE

LENTILLE D'AIDE À L'ACCOMMODATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority:  **03.02.2015   JP 2015019661**

(43) Date of publication of application:
**13.12.2017   Bulletin 2017/50**

(73) Proprietor: **JINS HOLDINGS Inc.
Gunma (JP)**

(72) Inventors:
• **SHIOYA, Shunsuke**
  **Maebashi-shi**
  **Gunma 371-0046 (JP)**
• **ITOU, Kazuyoshi**
  **Kawanishi-shi**
  **Hyogo 666-0035 (JP)**
• **NOMURA, Takanori**
  **Wakayama-shi**
  **Wakayama 640-8510 (JP)**

(74) Representative: **Mewburn Ellis LLP
Aurora Building
Counterslip
Bristol BS1 6BX (GB)**

(56) References cited:
EP-A1- 2 455 799        WO-A1-00/07064
JP-A- 2000 047 147      JP-A- 2002 122 826
JP-A- 2002 214 570      JP-A- 2008 524 645
JP-A- 2013 134 383      JP-A- 2013 210 450
JP-U- 3 144 374         KR-A- 20130 011 788
US-A- 4 989 967

EP 3 255 477 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to an accommodation assisting lens.

Background Art

Conventionally, there have been known eyeglasses that automatically adjust focuses. For example, there are eyeglasses each including means that detects a distance up to a position where both eyes are fixed, a lens capable of adjusting a focal distance, and means that adjusts a focal distance of a lens system based on distance information that is detected (refer to Patent Literature 1, for example).

Patent Literature 2 describes spectacle lenses with anti-glare effects and high visibility that makes use of a polarizing sheet with polarization degree of 12% or more and 30% or less in the visible light region sandwiched between resin lenses, and dots arranged in a honeycomb shape to control transmittance.

Patent Literature 12 describes a lens for improved definition that uses the pinhole effect for yellow light.

Patent Literature 3 describes a lens to prevent infrared radiation from penetrating the eyeballs, whilst maintaining visibility, using films that can be finely dotted.

Patent Literature 4 describes a contact lens that can be moved or rotated on the eyeball, the lens including a film that can have pinholes.

Patent Literature 5 describes a contact lens for correction of myopia, hyperopia, astigmatism and/or presbyopia, a light-shielding portion is included that can include a pinhole surrounded by fine holes.

Patent Literature 6 describes a lens with a coated surface layer in a pre-determined pattern so that some transparent portions remain on the lens.

Patent Literature 7 describes a lens for suppressing infrared rays including dotted chromium oxide films.

Patent Literature 8 describes a method of manufacturing lenses which can form thin films to desired shapes in the case where the dot-like thin films are formed on lens surfaces.

Patent Literature 9 describes an optical spatial filter to be mounted on a direct-vision optical device which includes minute circular or polygonal patterns.

Patent Literature 10 describes a lens including dotty thin films with high transmittability of light.

Patent Literature 11 describes a method for making a transparent optical element.

Citation List

Patent Literature

Patent Literature 1: Japanese Patent Laid-Open No. 2000-249902
Patent Literature 2: JP 3 144374 U
Patent Literature 3: WO 00/07064 A1
Patent Literature 4: JP 2013 210450
Patent Literature 5: EP 2 455 799 A1
Patent Literature 6: US 4 989 967 A
Patent Literature 7: JP 2000 047147 A
Patent Literature 8: JP 2002 122826 A
Patent Literature 9: JP 2013 134383 A
Patent Literature 10: JP 2002 214570 A
Patent Literature 11: JP 2008 524645 A
Patent Literature 12: KR 2013 0011788 A

Summary of Invention

Technical Problem

However, the eyeglasses described in Patent Literature 1 each need a plurality of components such as a visual line direction detector for detecting a distance, and a device that changes the focal distance of the lens. Therefore, a structure of the eyeglasses is very complicated.

Thus, the present invention has an object to provide a lens that can assist accommodation with a simple structure.

Solution to Problem

An accommodation assisting lens in one aspect of the present invention is set out in claim 1 of the appended claims.

An eyewear in a second aspect of the present invention is set out in claim 13 of the appended claims.

A contact lens in a third aspect of the present invention is set out in claim 14 of the appended claims.

A scope optical system in a fourth aspect of the present invention is set out in claim 15 of the appended claims.

Advantageous Effects of Invention

According to the present invention, it is possible to assist accommodation with a simple structure.

Brief Description of the Drawings

[Figure 1] Figure 1 shows an example of a result of a verification experiment of an accommodation response time.

[Figure 2] Figure 2 shows an example of a model of an optical simulation.

[Figure 3] Figure 3 shows an example of a dotted structure provided on a lens surface.

[Figure 4] Figure 4 shows an example of a relationship between contrast and a defocus amount in each phase difference.

[Figure 5] Figure 5 shows an example of a relationship between a defocus amount and blur.

[Figure 6] Figure 6 is a diagram for explaining an influence that is given to visibility by a defocus amount and a phase difference.

[Figure 7] Figure 7 shows an example of a relationship between contrast and a defocus amount in each light-shielding rate.

[Figure 8] Figure 8 shows a section of a part of a black and gray striped image.

[Figure 9] Figure 9 shows an example of a spectrum intensity in the section shown in Figure 8.

[Figure 10] Figure 10 is a view for explaining visibility by reduction in contrast.

[Figure 11] Figure 11 shows a result of experiment A.

[Figure 12] Figure 12 shows a result of experiment B.

[Figure 13] Figure 13 is a diagram for explaining a relationship between a design parameter in a lens and contrast.

[Figure 14] Figure 14 shows a relationship between a wavelength and a reflectance in a lens A.

[Figure 15] Figure 15 shows a relationship between a wavelength and a reflectance in a lens B.

[Figure 16] Figure 16 shows a relationship between a wavelength and a reflectance in a lens C.

[Figure 17] Figure 17 shows an experimental result concerning accommodation and near vision using the lenses A to C.

[Figure 18] Figure 18 is a diagram for explaining an example of the lens A.

[Figure 19] Figure 19 is a view for explaining consideration based on experiment 2.

[Figure 20] Figure 20 is a front view showing an example of eyeglasses in example 1.

[Figure 21] Figure 21 is a side view showing the example of the eyeglasses in example 1.

[Figure 22] Figure 22 is a view showing an example of an end surface along line A-A of a lens at a time of wearing the eyeglasses in example 1.

[Figure 23] Figure 23 is a view showing an example of a contact lens in a second example.

[Figure 24] Figure 24 is a view showing an example of a scope optical system in a third example.

Description of Embodiment

Hereunder, embodiments of the present invention will be described with reference to the drawings. The embodiment described as follows is only for illustration, and does not intend to exclude application of various modifications and techniques that are not explicitly shown below. Further, in the following illustrations of the drawings, the same or similar parts are expressed by being assigned with the same or similar reference signs. The drawings are schematic, and do not always correspond to actual sizes, ratios and the like. Among the drawings, parts differing in size relation and ratio from one another may be included.

[Embodiment]

Before explaining a lens according to the present invention, the circumstances leading up to inventing the lens according to the present invention and so on will be explained. The inventors have found that by providing a difference in phase in a first portion and a second portion in a lens, and providing a difference in transmittance, focus is easily achieved, and near vision is improved. First of all, experiments and the like leading up to the finding will be described. To begin with, a first experiment includes a plurality of experiments that were conducted for verifying a first hypothesis by the inventors who realized that if a subject wears a lens in which a geometric structure of a micrometer order is arranged on a surface, the subject easily obtains focus (referred to as the first hypothesis). Hereunder, the lens is referred to as a first lens. Further, a second experiment is an experiment that was conducted to verify a second hypothesis by the inventors who realized that when a subject wears a lens having a difference in transmittance between a dot portion and a non-dot portion which are provided in the lens, near vision of the subject is easily improved (referred to as the second hypothesis). First, the first experiment will be described.

<Verification experiment on accommodation response time>

Accommodation response time (ART: Accommodation Response Time) at a time of seeing through the first lens is verified by using an accommodopolyrecorder. In this experiment, as the first lens, a lens having a surface of a honeycomb structure is used. ART refers to a time period until an eye focuses on an indicator when the indicator is repeatedly moved to a near point, a far point, the near point, the far point, etc. The accommodopolyrecorder is a device that diagnoses a function of focusing, based on lengths of the time period until an eye focuses on the indicators that are placed far and near.

In this experiment, measurement is performed with dominant eyes of 11 subjects, ART at a time of the indicator moving from a near point to a far point (hereunder, also referred to as ART relaxation), and ART at a time of the indicator moving from the far point to the near point (hereunder, also referred to as ART tension) are measured by using a lens having a honeycomb structure (a lens with a surface of a honeycomb structure) and a lens having no honeycomb structure (an ordinary spherical lens).

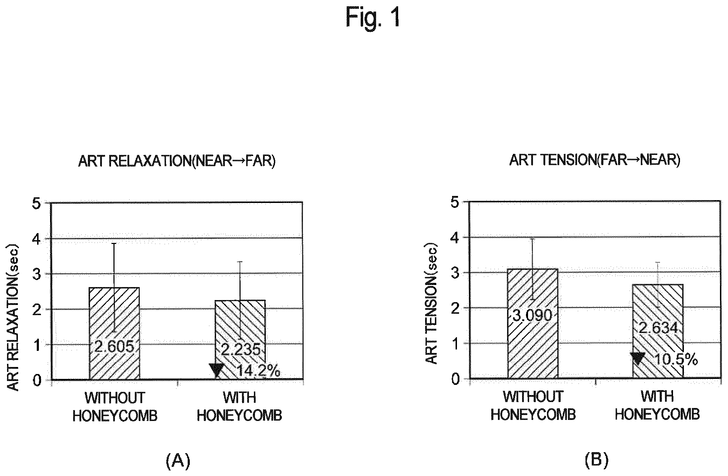

Figure 1 shows an example of a result of the verification experiment of the accommodation response time. Figure 1 (A) shows an example of an experimental result of ART relaxation. As shown in Figure 1 (A), in ART relaxation, ART of a subject wearing the lens having a honeycomb structure can be made shorter by approximately 14.2% than ART of a subject wearing the lens having no honeycomb structure.

Figure 1 (B) shows an example of an experimental result of ART tension. As shown in Figure 1 (B), in ART tension, ART of the subject wearing the lens having a honeycomb structure can be made shorter by approximately 10.5% than ART of the subject wearing the lens having no honeycomb structure. From the result shown in Figure 1, the lens having the honeycomb structure can be said as easily focusing.

<Optical simulation>

Next, an optical simulation will be described, which was conducted by using a lens in which microdots are arranged periodically as the first lens, in order to find a reason why focusing is easily obtained by wearing the first lens.

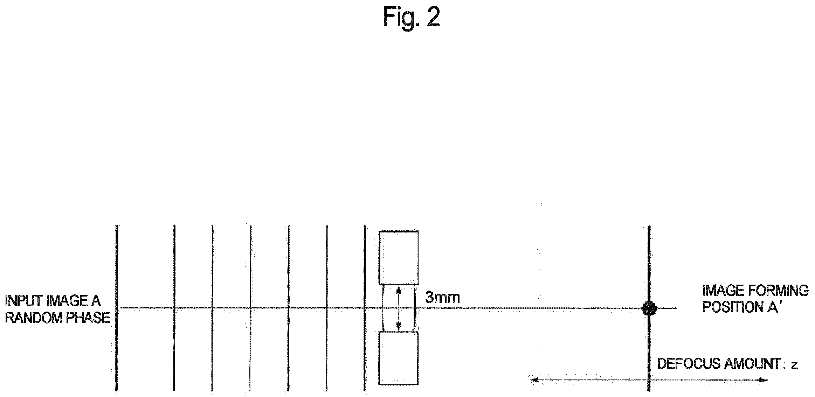

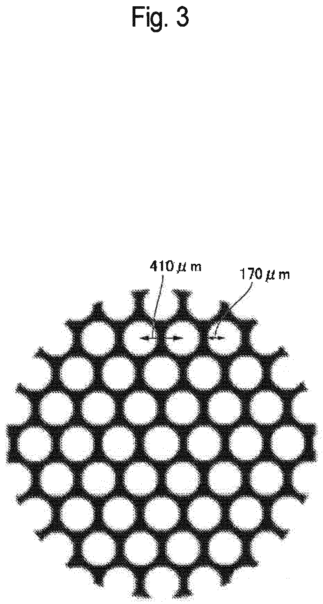

Figure 2 shows an example of a model of the optical simulation. The model illustrated in Figure 2 uses a point light source of 10 $\mu$m as a light source, and uses a lens of an aperture diameter of 3 mm. In the lens, 3 mm represents an average pupil diameter, and as shown in Figure 3, the lens surface has a structure obtained by simplifying the honeycomb structure to circles.

Further, a lens focus is 150 mm, and a focus position A' is 300 mm from the lens. One pixel size of an input image is 10 $\mu$m. Further, as a wavelength (hereunder, also referred to as a reference wavelength) of the light source, 546 nm in a wavelength region to which eye sensitivity is said as high is used as an example.

Figure 3 shows an example of a dotted structure provided on the lens surface. The structure shown in Figure 3 is a simplified structure of a honeycomb structure, and a pitch of a circle is 410 $\mu$m, a radius of the circle is 170 $\mu$m, and transmittance of light is 100% to 50%. A white portion in the structure shown in Figure 3 is a high-refractive region, and a black portion is a low-refractive region. Phase differences of the high-refractive region and the low-refractive region to the reference wavelength are varied between zero and $\pi/2$.

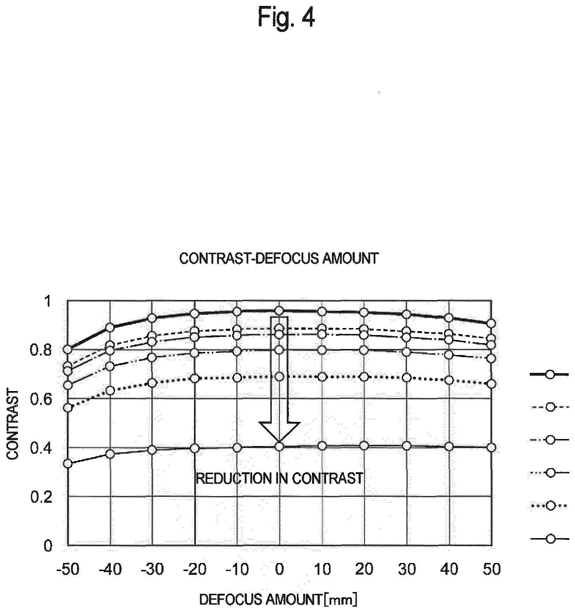

Figure 4 shows an example of a relationship between contrast and a defocus amount in each phase difference. In the graph shown in Figure 4, the contrast reduces as the phase difference to the reference wavelength becomes larger. Further, the defocus amount does not affect reduction in contrast so much.

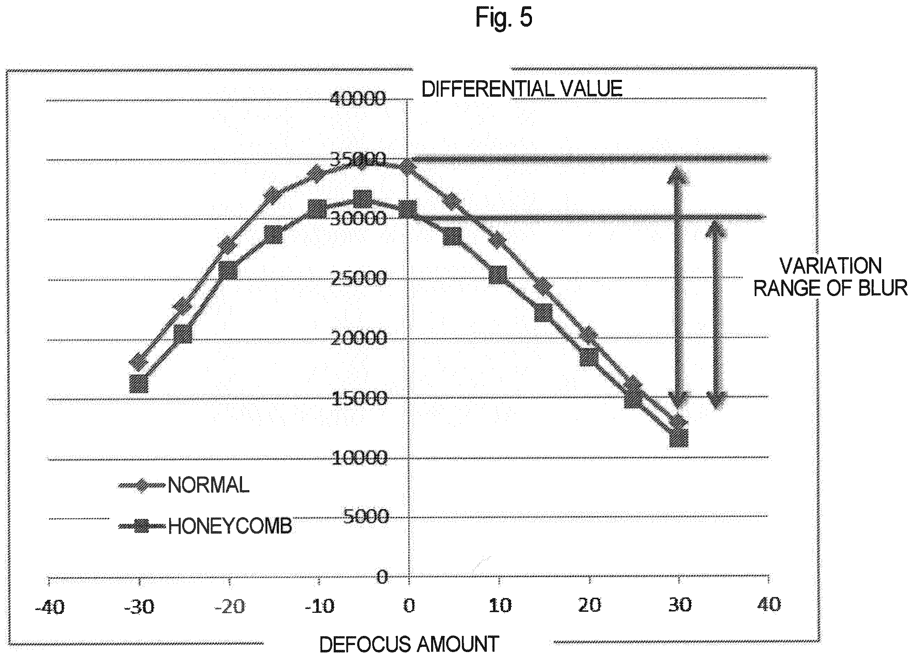

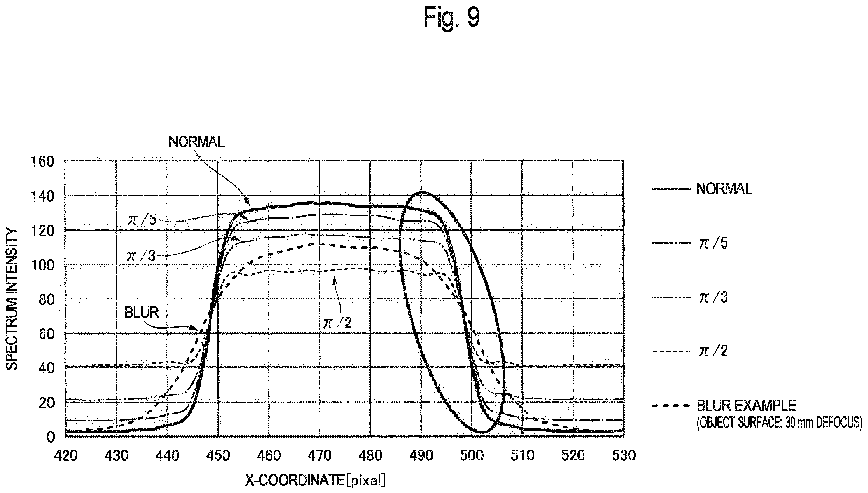

Figure 5 shows an example of a relationship between the defocus amount and blur. The graph shown in Figure 5 expresses a maximum value of a differential value of a line shown in a graph of Figure 9 that will be described later, and a degree of blur. In the graph shown in Figure 5, a lens having a honeycomb structure has a smaller decrease range of a differential value from focus to defocus than a normal lens. Therefore, the lens having the honeycomb structure can be said to have a smaller sense of defocusing because the lens having the honeycomb structure has a smaller variation range in blur at a time of defocusing than the normal lens.

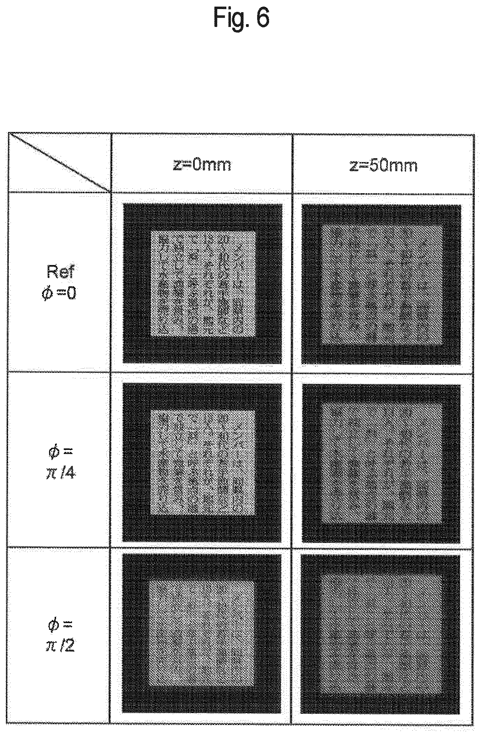

Figure 6 is a diagram for explaining an influence that is given to visibility by the defocus amount and a phase difference. Figure 6 shows images in the image forming position illustrated in Figure 2 in the respective phase differences at a time of focus (z=0 mm), and at a time of defocus (z=50 mm). As shown in Figure 6, at the time of focus, visibility of the image is hardly influenced when a phase difference $\phi$ to the reference wavelength = $\pi/4$, but when the phase difference $\phi$ = $\pi/2$, an image with poor visibility is obtained. Further, at the time of defocus, all of the images of the respective phase differences have unfavorable visibilities.

Here, although contrast is reduced by increasing the phase difference by using the dotted structure at the time of focus, visibility is not influenced so much if the phase difference is within a certain fixed range.

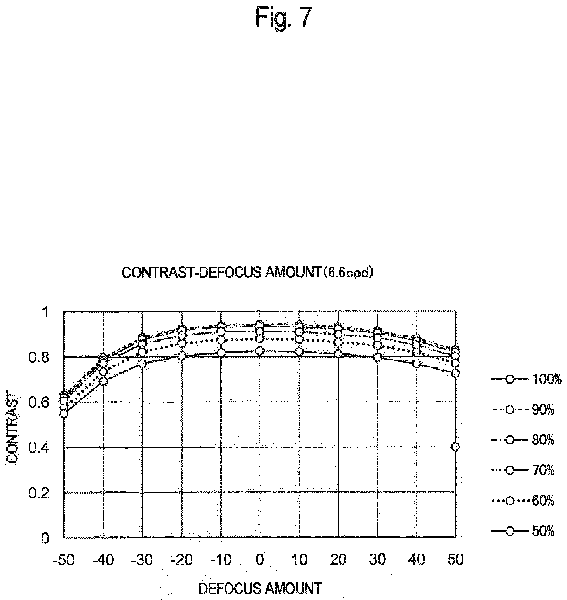

Figure 7 shows an example of a relationship between contrast and a defocus amount in each light-shielding rate. In the graph shown in Figure 7, it is found that the contrast is also reduced when the light-shielding rate is reduced. Therefore, it is effective to reduce not only the phase difference but also the light-shielding rate when reducing contrast. The first lens which is used in the graph shown in Figure 7 is a lens in which microdots that reduce the light-shielding rate are arranged.

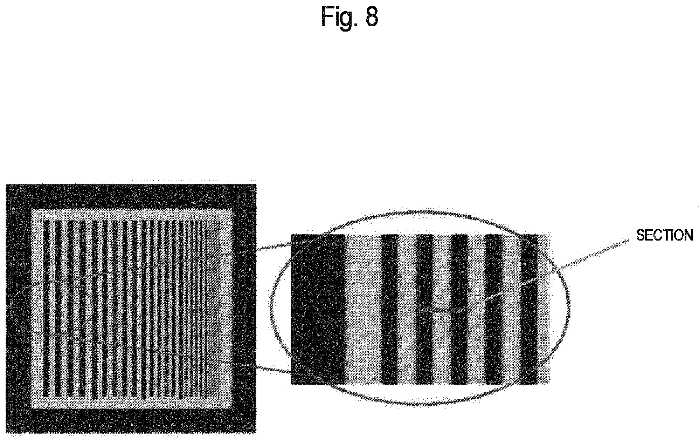

Next, it will be described that adding a phase difference to a lens does not cause blur of an image but reduces contrast. Figure 8 shows a section of a part of a black and gray striped image. In the section of a right enlarged view shown in Figure 8, spectrum intensities in respective boundaries of a black color, a gray color and the black color from the left are calculated, and difference in brightness in the section is examined.

Specifically, in the section shown in Figure 8, differences in brightness in the section on which images are formed at the time of focus are examined, by the respective lenses that differ in phase difference in the model illustrated in Figure 2. Figure 9 shows examples of the spectrum intensity in the section shown in Figure 8, in the respective lenses. As shown in Figure 9, in each of the lenses, the spectrum intensity becomes strong (brightness becomes high) in the gray color portion, and the spectrum intensity becomes weak (brightness becomes low) in the black color portion. Further, according to the graph shown in Figure 9, it is found that a brightness difference between the black color portion and the gray color portion becomes smaller as the phase difference becomes larger, and contrast is reduced.

Further, Figure 9 shows the spectrum intensity in the blurred section at the time of the defocus amount of 30 mm, for reference. Seeing respective inclinations in a region AR102, the inclinations are steep and constant irrespective of variations in the phase difference, and do not become gentle as that of the blurred section. Therefore, it is found that increasing the phase difference reduces contrast without causing blur.

Summarizing the above described experiment, in the first lens, light is diffracted as a result that the phase difference occurs to the light (the reference wavelength, for example) passing through the lens, and reduces the contrast. Further, as the phase difference becomes larger, contrast is reduced. Reducing contrast does not cause blur, but can affect visibility. In particular, when contrast is reduced in a predetermined range, visibility is not affected, but when the contrast is reduced to exceed the predetermined range, visibility is worsened. It is because of a diffraction phenomenon of light that contrast is also reduced by shielding the lens from light.

Here, as a result of the above described experiment, the inventors have reached a new hypothesis that in the first lens, focus is easily obtained, by contrast being reduced while no blur occurs.

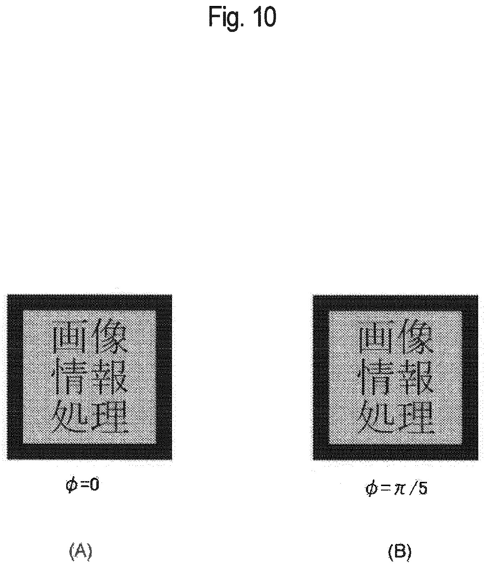

Figure 10 is a diagram for explaining visibility by reduction in contrast. Figure 10 (A) shows an image in the image forming position with a phase difference $\phi$ = 0 to the reference wavelength, in the experiment illustrated in Figure 2. Figure 10 (B) shows an image in the image forming position of the phase difference $\phi$ = $\pi/5$ to the reference wavelength.

Comparing both the images shown in Figure 10 (A) and (B), both images do not differ so much in visibility. According to Figure 4, with $\phi$ = $\pi/5$, visibility is not reduced so much, although contrast is reduced by approximately 10% at the time of focus.

From the above, the inventors conducted an experiment to verify a new first hypothesis that reduction in contrast makes focus easier.

<First hypothesis verification experiment>

Experiment contents are as follows.

(Experiment A)

· A time (ART) required for focusing on each test image displayed on a monitor of PC (Personal Computer) from a state where a subject closes his or her eyes and is relaxed (approximately five seconds) is measured. It is approximately 40 cm from the subject to the monitor. Contrasts of the respective test images are set at 100%, 95%, 90%, 85% and 80% by using a function of the monitor, for example.

· Number of measurements: 20 times for the test image of each of the contrasts

· Measurement order: random

· Subject: four persons

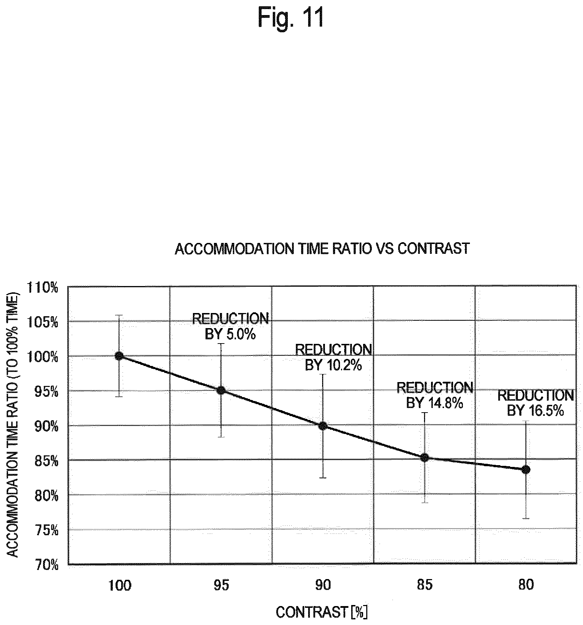

Figure 11 shows a result of experiment A. As shown in Figure 11, percentage of an average ART of the test image of each of the contrasts is graphed by setting the average ART of the test image with the contrast of 100% to 100%.

In the example shown in Figure 11, the average ART is shortened at a constant ratio up to the test image of the contrast of 85%. Specifically, as the contrast is reduced by 5%, the average ART is reduced by approximately 5%. However, reduction in the average ART from the test image with the contrast of 85% to the test image of the contrast of 80% is 1.7%. That is, it is conceivable that even when the contrast is reduced to 85% or less, a reduction rate of the average ART converges.

(Experiment B)

· Experiment conditions are similar to those in experiment A, and what is different is that in the test image with the contrast of 100%, the first lens shown in Figure 3 is worn as the eyeglass lens, and ART is measured.

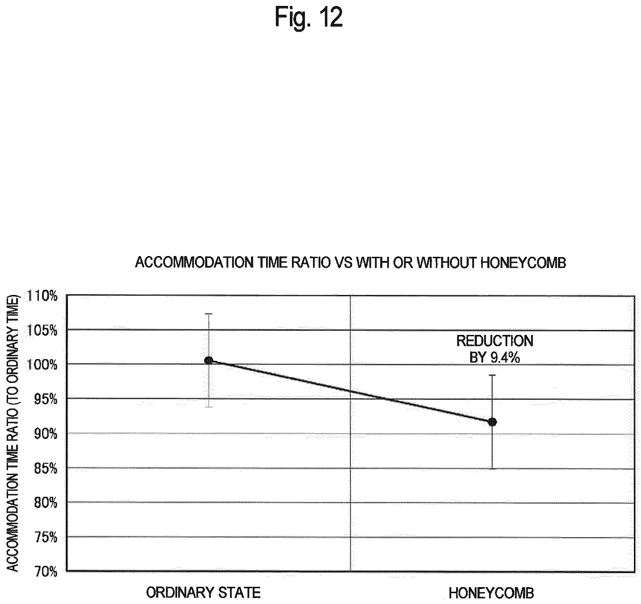

Figure 12 shows a result of experiment B. As shown in Figure 12, wearing the first lens reduces ART in the test image with the same contrast of 100%. That is, it can be said that ART can be reduced by reducing the contrast by the first lens.

Consequently, it is found that reduction in contrast is effective in reduction of ART by experiment A, and further, by experiment B, it is found that even when the lens that reduces contrast is worn, ART can be reduced similarly.

Here, when the lens that reduces contrast is worn as eyeglasses to assist accommodation, visibility by reduction in contrast becomes a problem. Therefore, how far the contrast can be reduced is considered from the viewpoint of visibility. Considering by using reduction in phase difference which is correlated with reduction in contrast, there is no problem in visibility when the phase difference is up to around $\pi/4$, according to Figure 6. According to Figure 4, the contrast is approximately 80% when the phase difference is $\pi/4$.

Consequently, comparing and carefully considering reduction of ART by reduction in contrast and securement of visibility, it is preferable to reduce the contrast from 100% to approximately 80%, that is, when it is converted into the phase difference $\phi$ to the reference wavelength, the phase difference $\phi$ preferably has a value in a range of $0 < \phi \leq$ approximately $\pi/4$.

Further, when attention is paid to ART, for example, according to Figure 11, the reduction rate of the average ART does not change so much even when the contrast increases from 80% to 85%, but when the contrast is increased to 85% or more, the reduction rate of the average ART changes to approximately 90% from approximately 85%. The smaller reduction rate represents the shorter average ART. When the contrast is 85%, the phase difference $\phi$ corresponding to the contrast is $\pi/5$. Accordingly, from the viewpoint of ART and visibility, it is more preferable to set the phase difference $\phi$ at a value in a range of $\pi/5 < \phi \leq \pi/4$.

<Lens design>

In order to make focus easy, the lens that reduces contrast is considered. It is also possible to reduce contrast by reducing the light-shielding rate as shown in Figure 7, but in this case, it is considered to reduce contrast while ensuring visibility by providing a phase difference in the light passing through the lens (the reference wavelength, for example).

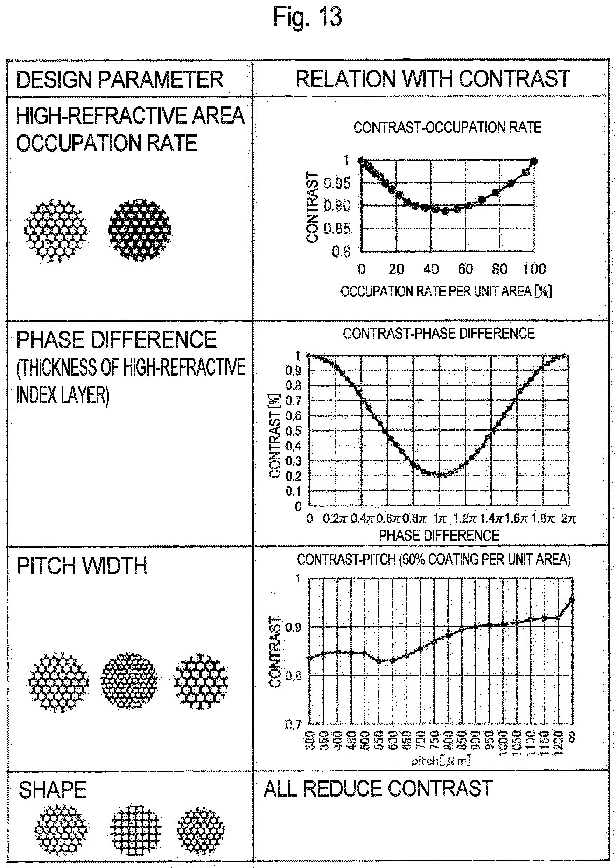

Figure 13 is a diagram for explaining relationships of design parameters in a lens with contrast. In an example shown in Figure 13, as examples of design parameters of the lens, an occupation rate of a high-refractive area (white dotted area), the phase difference (film thickness of a high-refractive layer), a pitch width, and a shape are included. Further, examples of pattern structures corresponding to the design parameters are illustrated in the design parameters.

When the occupation rate of the high-refractive area is reduced to 0% from 100%, the contrast is reduced the most when the occupation rate is approximately 50%. Therefore, when the occupation rate is set at approximately 50%, the contrast can be reduced, and a film thickness of the high-refractive area can be reduced. Considering lens production, lens production is easier by changing the occupation rate than changing the film thickness, so that it is preferable to reduce contrast as much as possible by using the occupation rate, by setting the occupation rate at approximately 40% to 60% inclusive.

Next, the phase difference to the reference wavelength is set as one example of the design parameter of the lens.

The relationship of the phase difference and the contrast shown in Figure 13 is a graph at a time of the contrast with the phase difference $\phi$ = 0 being normalized to 1, and is slightly different from the relationship of the actual measurement values shown in Figure 4. At the time of actual lens design, either the relationship shown in Figure 4 or the relationship shown in Figure 13 may be used, or the lens may be designed by using an equation approximating the relationship between the contrast and the phase difference. In the example shown in Figure 13, the contrast can be reduced to a value of 80% to approximately 85%, when visibility is taken into consideration.

Next, in the pitch width, the number of coatings entering the pupil diameter of 3 mm is decreased when the pitch width becomes large. Consequently, in order to reduce contrast while preventing decrease in the number of coatings, the pitch width of 300 to 500 $\mu$m is suitable.

In the end, in the shape of the dot to be a convex portion, the shape or the like is changed. For example, disposition of circles is changed, the circle is changed to a honeycomb shape, a triangular shape, and a quadrangular shape. It is confirmed that the shapes and dispositions of the convex portions are all effective to reduce contrast by an experiment. Concave portions may be in dot shapes.

The above described lens design is only an example, lenses of the present invention are defined by the scope of claim 1.

Next, the aforementioned second experiment will be described. The inventors have found an effect that near vision is improved, besides the effect of making focus easy, when the subjects wear the aforementioned first lens. Here, the inventors pay attention to a pinhole effect that is well known as an improvement in near vision, and further pay attention to a difference in light transmittance between the dot portion corresponding to a pinhole and the non-dot portion that is not a dot. Thus, in order to investigate an influence by the difference in transmittance between the dot portion and the non-dot portion, the inventors conducted the second experiment. Hereunder, the second experiment will be described.

<Influence by difference in transmittance>

In the second experiment, three lenses each having a difference in average transmittance in a visible light region (for example, 380 nm to 780 nm) in the dot portion and the non-dot portion are used.

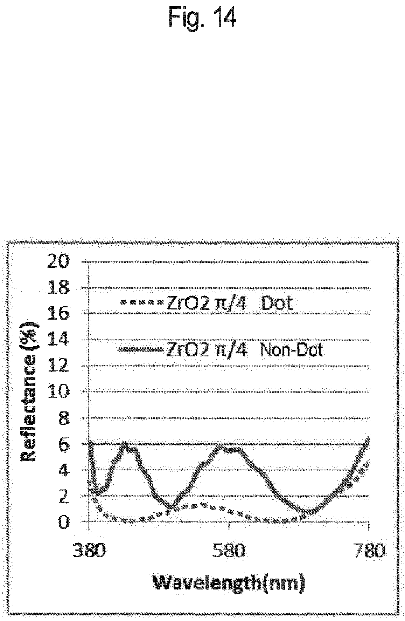

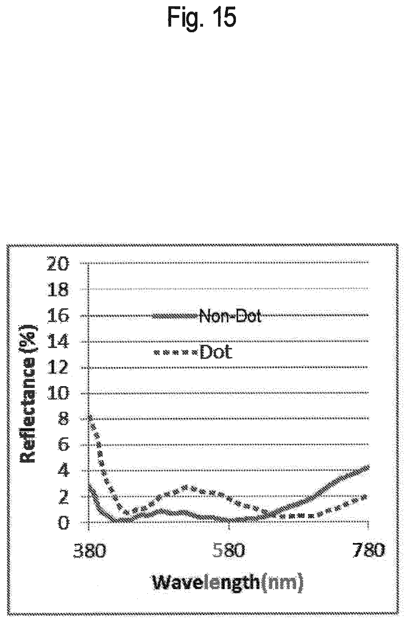

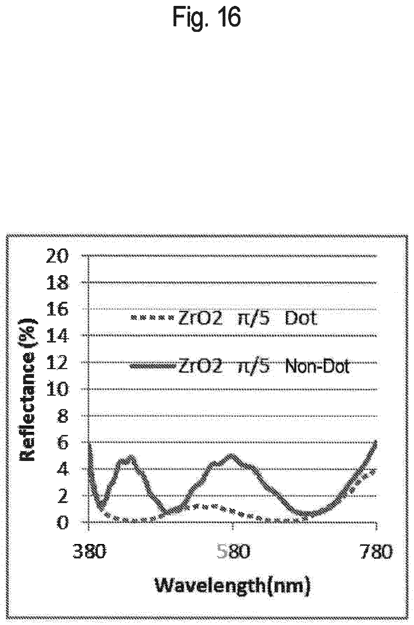

Figure 14 shows a relationship between a wavelength and a reflectance in a lens A. Figure 15 shows a relationship between a wavelength and a reflectance in a lens B. Figure 16 shows a relationship between a wavelength and a reflectance in a lens C. The examples shown in Figures 14 to 16 each use reflectance, but may use transmittance. The transmittance is calculated based on transmittance = 1 - reflectance. Hereunder, transmittance will be described as an example.

The lens A shown in Figure 14 is a newly developed lens, uses a zirconium dioxide (zirconia, chemical formula: $ZrO_2$) as a material, and is designed so that a phase difference of the reference wavelengths transmitted through the dot portion and the non-dot portion is $\pi/4$. Further, in the lens A, in a visible light region, a difference in average transmittance between the dot portion and the non-dot portion is set as 2.4%. An average transmittance t_ave is calculated based on the following expression (1).

[Expression 1]

$$t\_ave = \frac{\int_{380}^{780} t(\lambda)d\lambda}{(780-380) \times 100(\%)} \times 100 \qquad \cdots (1)$$

t($\lambda$): transmittance (%)

Further, in the lens A, a difference in average transmittance in a predetermined region (around 400 nm and around 580 nm) in a visible light region is larger than a difference in average transmittance in a region other than the predetermined region in the visible light region. Speaking from another viewpoint, in the lens A, a difference in transmittance at a peak time between the dot portion and the non-dot portion in the predetermined region (around 400 nm and around 580 nm) is 4% or more. Basically, the transmittance is high in the dot portion, and the transmittance is low in the non-dot portion.

Further, light is transmitted in the dot portion, and light is reflected in the non-dot portion, whereby the pinhole effect by the dot portion can be produced. Thereby, depth of focus is extended, so that a blurred portion can be clearly seen. The predetermined region in the visible light region can include at least a blue wavelength region. Thereby, eye fatigue can be suppressed by cut of blue light while the pinhole effect is produced.

The lens B (outside of the scope of the claims) shown in Figure 15 is a lens that is already on the market, and has a pattern of a microscopic honeycomb structure. In the lens B, a difference in average transmittance between a honeycomb portion and a non-honeycomb portion is 0.5% in a visible light region.

The lens C (outside of the scope of the claims) shown in Figure 16 is a lens that is developed for being compared with the lens A shown in Figure 14, uses a zirconium dioxide as a material, and is designed so that a phase difference of reference wavelengths transmitted through a dot portion and a non-dot portion is $\pi/5$. Further, in the lens C, in a visible light region, a difference in average transmittance between the dot portion and the non-dot portion is set as 1.8%.

Further, in the lens C, differences in average transmittance in predetermined regions (around 400 nm and around 580 nm) in the visible light region are larger than differences in average transmittance in other regions than the predetermined regions in the visible light region. From another viewpoint, in the lens **C,** the differences in transmittance at a peak time between the dot portion and the non-dot portion in the predetermined regions (around 400 nm and around 580 nm) are 4% or more.

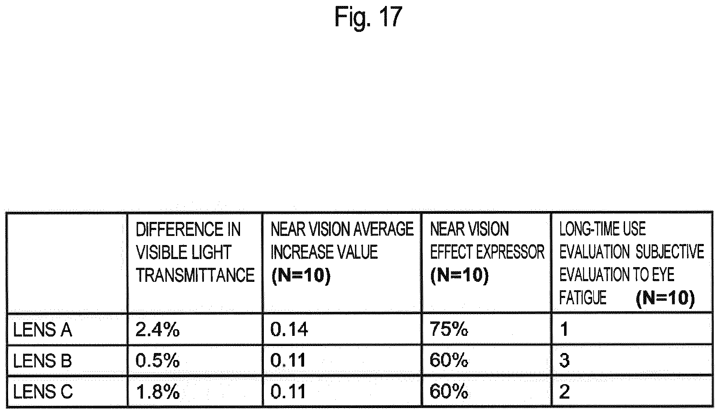

Figure 17 shows an experiment result concerning accommodation and near vision using the lenses A to C. In an experiment shown in Figure 17, 10 subjects of men and women of ages of 20 to 50 wore the respective lenses A to C, and an experiment on near vision was conducted in each of the lenses.

A near vision average increase value shown in Figure 17 shows how much the near vision increased in average in the case where the subjects wore the respective lenses as compared with the case where the subjects did not wear the respective lenses. In the lens A, near vision increases by 0.14, whereas in the lenses B and C, near vision increases by 0.11.

A near vision effect expressor shown in Figure 17 represents a ratio of persons who improved in near vision in the subjects. With the lens A, 75% of the subjects improved in near vision, whereas with the lenses B and C, 60% of the subjects improved in near vision.

According to the near vision average increase value and the near vision effect expressor shown in Figure 17, it is found that the lens A is more effective in improvement in near vision than the lenses B and C. Further, when the lens A and the lens C are compared, a large difference lies in the differences in average transmittance between the dot portions and the non-dot portions in visible light, and it is considered that by the difference, the influences given to improvement in near vision differ. Thus, by the average transmittances of the lens A and lens **C,** a threshold value of the average transmittance which has an influence on improvement in near vision is considered to be at approximately 2.0%. Accordingly, it can be said that when the difference in average transmittance is less than 2.0, near vision is not improved so much, whereas when the difference in average transmittance is 2.0% or more, near vision is improved greatly.

Further, when patterning was applied so that a Cr metal forms the non-dot portion, the pattern shape of the dots can be visually observed when the difference in average transmittance between the dot portion and the non-dot portion exceeds 50%, and an adverse effect is exerted on visibility. Accordingly, the difference in average transmittance in the case where focus is easily obtained, the near vision is improved and visibility is not impaired is considered to be 2% to 50%.

A long-time use evaluation shown in Figure 17 shows a subjective evaluation to eye fatigues of the subjects who worn the respective lenses for a long time. The subjects ranked each of the lenses in order that eyes of the subjects did not get tired. The result of ranking is the lens A for No. 1, the lens C for No. 2, and the lens B for No. 3. Consequently, the lens A also has an effect of hardly causing eye fatigue, as compared with the other lenses.

In the lens A shown in Figure 17, an experiment on accommodation response time was conducted by using an accommodopolyrecorder. According to the experiment, it has been confirmed that when the subject wore the lens A, the accommodation response time was reduced by 8% in average as compared with the case where the subject did not wear the lens A.

<Example of lens A>

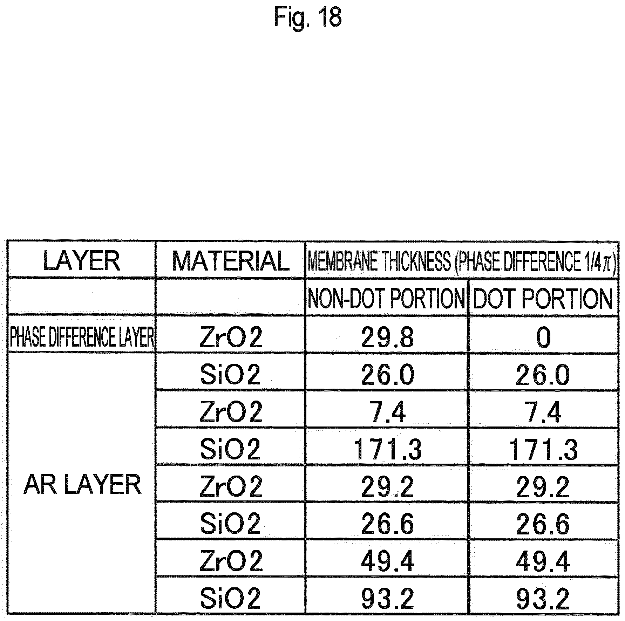

Figure 18 is a diagram for explaining an example of the lens A. The lens A shown in Figure 18 is supposed to be used as a lens for eyeglasses, for example. The lens A shown in Figure 18 is formed with a film thickness of the non-dot portion of 29.8 nm so that the phase difference in the reference wavelength is $\pi/4$ with use of zirconia as a material of a phase difference layer.

Further, AR (Anti-Reflection) layers (also referred to as anti-reflection film patterns) are sequentially stacked on a hard coat layer of the base material in sequence from a top of a table shown in Figure 18. For example, a silicon dioxide (chemical formula: $SiO_2$) of a film thickness of 26.0 nm is stacked on the hard coat layer, for example, and a zirconia of a film thickness of 7.4 nm is stacked thereon.

According to the AR layers shown in Figure 18, the difference in average transmittance as shown in Figure 14 can be produced. Further, the difference in average transmittance as shown in Figure 14 may be produced by a pattern using a colored material such as a coloring matter and a metal, besides being produced by the difference in transmittance (reflectance) between the pattern portion and the non-pattern portion. The difference in average transmittance in the present invention is produced by a coloring matter pattern provided on a lens surface, the coloring matter pattern being composed of a metal and forming the non-dot portion.

The coloring matter pattern of the present invention is composed of a metal. As a coloring matter layer provided on the lens surface, in the case of dye, for example, there are cited Kayaset Blue 906 (made by Nippon Kayaku Co., Ltd.), Kayaset Brown 939 (made by Nippon Kayaku Co., Ltd.), Kayaset Red 130 (made by Nippon Kayaku Co., Ltd.), Kayalon Microester Red C-LS conc (made by Nippon Kayaku Co., Ltd.), Kayalon Mixroester Red AQ-LE (made by Nippon Kayaku Co., Ltd.), Kayalon Microester Red DX-LS (made by Nippon Kayaku Co., Ltd.), Dianix Blue AC-E (made by DyStar Japan Ltd.), Dianix Red AC-E01 (made by DyStar Japan Ltd.), Dianix Yellow AC-E new (made by DyStar Japan Ltd.), Kayalon Microester Yellow C-LS (made by Nippon Kayaku Co., Ltd.), Kayalon Microester Yellow AQ-LE (made by Nippon Kayaku Co., Ltd.), Kayalon Microester Blue C-LS conc (made by Nippon Kayaku Co., Ltd.), Kayalon Microester Blue AQ-LE (made by Nippon Kayaku Co., Ltd.), Kayalon Microester Blue DX-LS conc (made by Nippon Kayaku Co., Ltd.) and the like.

The coloring matter pattern of the present invention is composed of a metal. As the coloring matter layer, in the case of a pigment, for example, there are cited Quinacridone CI 122, Phthalocyanine CI 15, Isoindolinone CI 110, Inorganic CI 7, Phthalocyanine, Mono-azonaphthal AS, a carbon pigment and the like.

As the coloring matter layer, in the case of a metal, for example, there are cited a chrome, an aluminum, a gold, a silver and the like.

Further, the difference in average transmittance may be produced by combining the AR layers and a coloring matter pattern.

The lens A shown in Figure 18 is used as an eyeglass lens, for example, whereby, a user wearing the eyeglasses easily obtains focus without impairing visibility, and improves in near vision. Further, the effect that eyes hardly get tired is also provided.

<Consideration based on experiment 2>

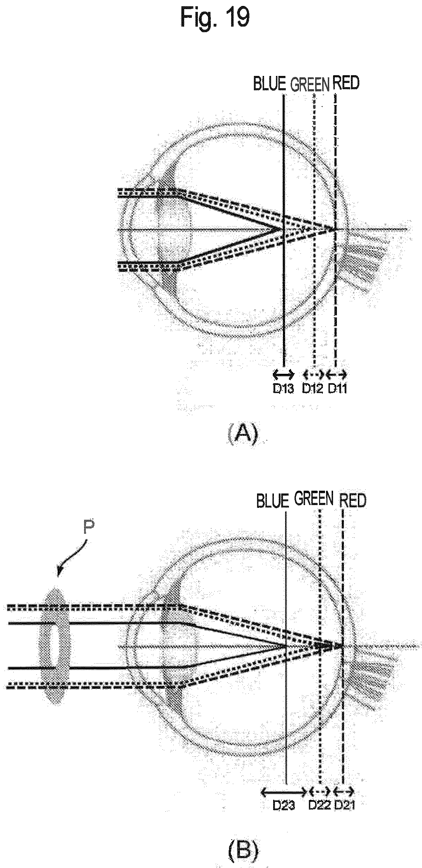

Figure 19 is a diagram for explaining a consideration based on experiment 2. Figure 19 (A) is a view showing a relationship among a focal point, a chromatic aberration, and a depth of focus of each of wavelengths using an ordinary colorless lens. A chromatic aberration refers to the fact that a focal distance forming an image on a retina differs depending on a light wavelength. As illustrated in Figure 19 (A), when red focuses on a retina, green and blue focus on regions more frontward from the retina as the wavelengths become shorter as is the case of green and blue. Thereby, distances among focuses are long, a chromatic aberration occurs greatly, and blur occurs. In order to correct the chromatic aberration, focus is obtained by a brain performing image correction, and a ciliary muscle slightly moving, but the focusing exerts a burden on eyes. In Figure 19 (A), D11 shows an example of the depth of focus of a red wavelength, D12 shows an example of the depth of focus of a green wavelength, and D13 shows an example of the depth of focus of a blue wavelength.

Figure 19 (B) is a diagram showing a relationship among a focal point, a chromatic aberration, and a depth of focus of each of wavelengths using the lens A. The lens A can extend the depth of focus of the blue wavelength by the pinhole effect by the dot portion while cutting the blue wavelength. That is, the depth of focus of the blue wavelength extends to D23 from D13.

Here, a pinhole effect will be briefly described. As illustrated in Figure 19 (B), by the lens A provided with a pattern P that produces a pinhole effect for the blue wavelength, light of the blue wavelength is narrowed to enter the eye. Thereupon, a range (depth of focus) of a surface where focusing is achieved extends, and a range that looks blurred in the state without the pinhole effect decreases. The depth of focus extending means that an angle formed by upper and lower light beams becomes small (acute). Further, since the depth of focus is extended, a muscle that adjusts the focus of the eye is not used excessively, so that an effect of relieving tension of the muscle of the eye is provided.

Further, as illustrated in Figure 19 (B), by extending the depth of focus of the blue wavelength by the pinhole effect, a focusing position of the blue wavelength is increased, and the chromatic aberration is decreased. Therefore, focusing is easily obtained, and blur can be reduced. Accordingly, it can be said that by reduction (or the phase difference of the reference wavelength) in contrast by the doted pattern, and the difference in light transmittance between the dot portion and the non-dot portion, focus is easily obtained, and near vision is improved. The wavelength region in which the depth of focus is extended is not limited to the blue wavelength region, but the green and red wavelength regions are selectively cut by the lens A, and the amount of light that is incident on the eye may be reduced. Further, the lens A is caused to produce a pinhole effect by using the pattern of the dot portion, but the shape of the pattern is not limited to a dot, and may be a shape such as a honeycomb shape. Further, a pitch width between dots is allowed to be up to approximately 1500 μm when the pinhole effect is enhanced. Accordingly, when the example shown in Figure 13 is taken into consideration, as the pitch width between the patterns such as dots, 300 to 1500 μm can be applied.

Hereunder, examples using lenses having parameters within the range explained as preferable in the lens design shown in Figure 13 and/or the lens A having the characteristics shown in Figure 14 will be described. The lens of the present invention is defined by the scope of claim 1.

[Example 1]

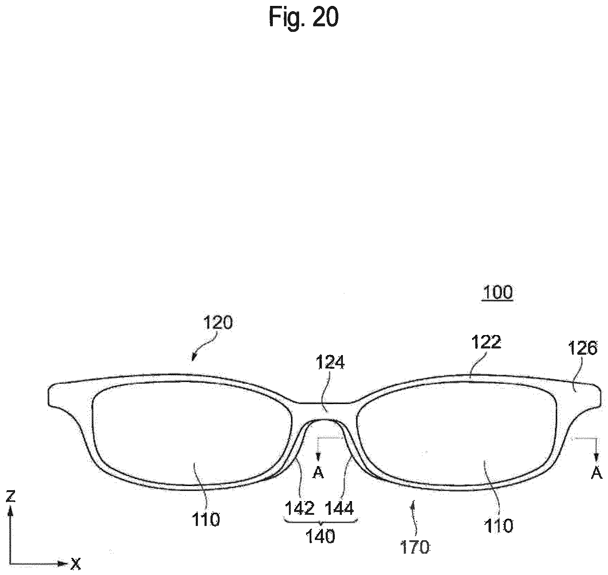

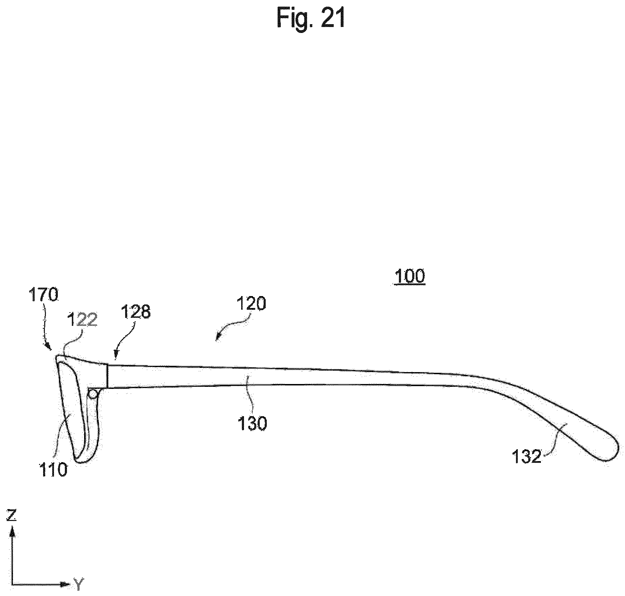

A structure of entire eyeglasses will be described with use of Figures 20 and 21. The eyewear of the present invention is defined in claim 13. Figure 20 is a front view showing an example of eyeglasses 100 in example 1. Figure 21 is a side view showing an example of the eyeglasses 100 in example 1.

The eyeglasses 100 illustrated in Figures 20 and 21 is an example of an eyewear, and comprise lenses 110 and a frame 120. The frame 120 has, for example, temples 130, tips 132, and a front 170.

The front 170 supports a pair of lenses 110. Further, the front 170 has, for example, rims 122, a glabella section (a bridge, for example) 124, end pieces 126, hinges 128, and a pair of nose pads 140. The pair of lenses 110 are lenses for assisting accommodation.

Depending on the type of eyeglasses 100, there may be no bridge section of the frame by using only one lens. In this case, a glabella section of the one lens is used as the glabella section.

The pair of nose pads 140 comprises a right nose pad 142 and a left nose pad 144. A pair of rims 122, end pieces 126, hinges 128, temples 130 and tips 132 are provided respectively on a left and right sides. The hinge 128 is not limited to a hinge using a screw, but may be a hinge using a spring, for example.

The rim 122 holds the lens 110. The end piece 126 is provided at an outer side of the rim 122, and holds the temple 130 rotatably by the hinge 128. The temples 130 press upper portions of ears of a user, and secure the part. The tips 132 are provided at tip ends of the temples 130. The tips 132 contact the upper portions of the ears of the user. The tips 132 are not necessarily the components indispensable to the eyeglasses 100.

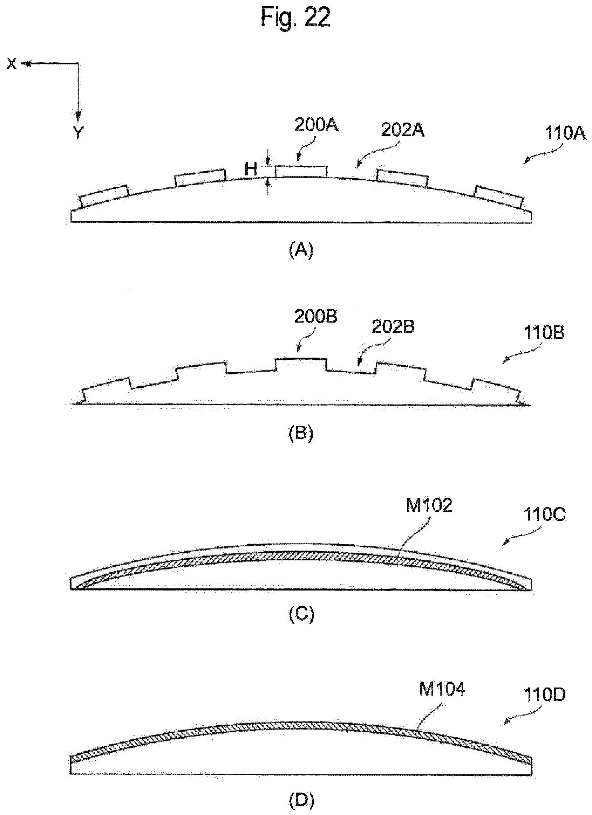

Figure 22 is a view showing an example of an end surface along line A-A of the lens 110 at the time of wearing the eyeglasses in example 1. Convex portions illustrated in Figure 22 are not in actual dimensions but illustrated by being enlarged in order to be understandable. The actual convex portions are of sizes at a level of micrometer, for example, and an infinite number of convex portions are present to the lens.

Figure 22 (A) is a view showing an example of a lens 110A for assisting accommodation. The lens of the present invention is defined in claim 1. The lens 110A illustrated in Figure 22 (A) comprises a pattern structure having a plurality of convex portions 200A in a lens main body as a mechanism that reduces contrast. The example of the pattern structure is either the above pattern structure or the pattern structure having the preferable parameters shown in Figure 13. By the pattern structure, the phase difference is provided in the transmitted light (the reference wavelength, for example), and contrast is reduced. By the convex portions 200A, concave portions 202A are generated among the convex portions 200A. As described above, the convex portion 200A is actually at a level of micrometer, and an infinite number of convex portions 200A are present in the lens main body. A shape of the convex portion 200A is not particularly limited.

The convex portion 200A can be formed by being vapor-deposited on the lens main body. As for a vapor deposition method, a known technique can be used. A material of the convex portion 200A is more preferable as the material has higher transparency and a higher refractive index, and may be an inorganic compound such as a titanium oxide, a zirconium oxide, an aluminum oxide, a silicon nitride, a silicon oxide, a gallium nitride, and a gallium oxide, or an organic compound such as a polycarbonate, an acrylic resin, an urethane resin, an aryl resin, and an epithio resin.

The phase difference is determined by the material of the convex portion 200A and a thickness H, and, for example, after the material is determined, the thickness H can be determined so that a desired phase difference is achieved.

Figure 22 (B), given for reference, is a view showing an example of a lens 110B for assisting accommodation. The lens 110B illustrated in Figure 22 (B) comprises a pattern structure having a plurality of convex portions 200B in a lens main body as a mechanism that reduces contrast. By the pattern structure, the phase difference is provided in the transmitted light, and contrast is reduced. By the convex portions 200B, concave portions 202B are generated among the convex portions 200B, as in Figure 22 (A). The convex portion 200B is actually of a micrometer level, and an infinite number of convex portions 200B are present in the lens main body. A shape of the convex portion 200B is not particularly limited.

In the case of the lens 110B illustrated in Figure 22 (B), the lens main body and the convex portion 200B are of a same material. Therefore, cost reduction and volume production are enabled by forming the convex portions 200B by using a machining technique, rather than adding the convex portions 200A by vapor deposition or the like as illustrated in Figure 22 (A).

Figure 22 (C) is a view showing an example of a lens 110C for assisting accommodation. The lens of the present invention is defined in claim 1. In the lens 110C illustrated in Figure 22 (C), as a mechanism that reduces contrast, a film thickness layer M102 having the pattern structure illustrated in Figure 22 (A) or (B) is provided inside the lens main body. Thereby, the film thickness layer M102 is contained in the lens main body, so that deterioration of the film thickness layer M102 can be prevented, and an effect of assisting accommodation can be kept permanently.

Figure 22 (D) is a view showing an example of a lens 110D for assisting accommodation. The lens of the present invention is defined in claim 1. In the lens 110D illustrated in Figure 22 (D), as a mechanism that reduces contrast, a sheet M104 having the pattern structure illustrated in Figure 22 (A) or (B) is provided inside the lens main body. Consequently, by attaching the sheet M104 to a surface of the lens main body, the effect of assisting accommodation can be easily added to the conventional lens.

The lenses illustrated in Figure 22 described above each comprise the mechanism that causes the light incident on the lens main body to generate the first phase and the second phase, and reduces contrast by the phase difference between the first phase and the second phase. Further, in the lenses illustrated in Figure 22, a difference in light transmittance may be provided in the convex portions 200 and the concave portions 202, or in the pattern portion and the non-pattern portion. Thereby, near vision can be improved while focus is easily obtained.

In each of the lenses illustrated in Figure 22 (A) and (B), the pattern structure may be provided on an outer surface (minus Y direction), an inner surface (Y direction) or both the surfaces of the lens. Further, the lens main bodies or the pattern structures may be transparent or colored. Further, a hard coat layer that prevents a scar and an anti-reflection coated layer may be stacked on the lens surfaces.

[Example 2]

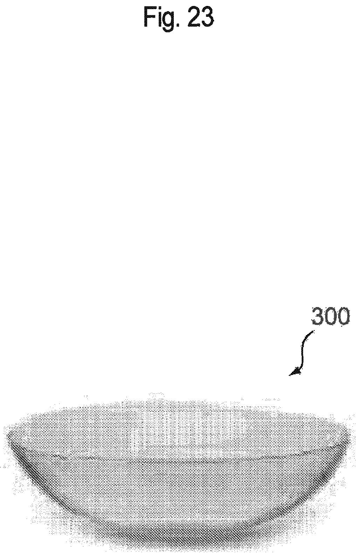

In example 2, the case of applying the function of the aforementioned lens to a contact lens will be described. The contact lens of the invention is defined in claim 14. Figure 23 is a view showing an example of the contact lens in the second example. A contact lens 300 shown in Figure 23 has the mechanism that reduces contrast and the mechanism that provides a difference in light transmittance between the pattern portion and the non-pattern portion, which are described above. For example, the contact lens 300 has a pattern providing a phase difference to the reference wavelength, and is provided with the sheet having a difference in transmittance between the pattern portion and the non-pattern portion, on a surface or an inside of the contact lens. Thereby, the aforementioned effects can be exhibited.

[Example 3]

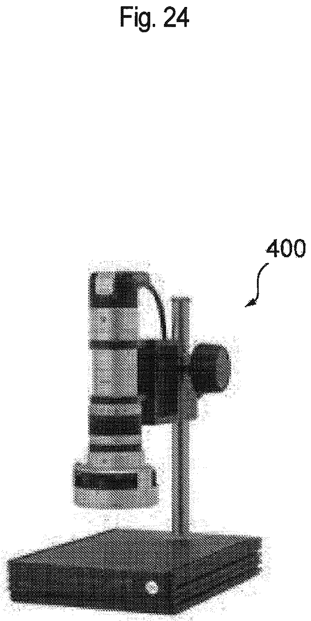

In example 3, the case of applying the functions of the lens described above to a scope optical system will be described. The scope optical system of the invention is defined in claim 15. Figure 24 is a view showing an example of the scope optical system in the third example. A scope optical system 400 shown in Figure 24 is a lens of a microscope or the like, and has the mechanism that reduces contrast described above, and the mechanism that provides a difference in light transmittance between the pattern portion and the non-pattern portion. For example, the scope optical system 400 has a pattern providing a phase difference to the reference wavelength, and is provided with the sheet having a difference in transmittance between the pattern portion and the non-pattern portion, on a surface or an inside of the contact lens. Thereby, the aforementioned effects can be exhibited.

[Modified examples]

Besides the lenses illustrated in Figure 22, the present invention may use a lens that reduces contrast by changing the light-shielding rate.

Further, the lenses in the present invention may be applied to a progressive power (presbyopia) lens and the like. Thereby, the user wearing the progressive power lens can easily focus when the user moves focus. Further, the user can easily obtain focus, and therefore can read a book easily in a shaking place.

Further, the lens in the present invention may be applied to sunglasses for sports or the like. This makes it easier for the user wearing the sunglasses to follow the movement of a ball during ball game.

Further, the lens in the present invention may be also applied to a lens for a camera and the like, besides the lens for eyeglasses. Further, the dots are not limited to those in a round shape but may include those in a polygonal shape.

Further, described here for reference, a lens may be used, which reduces contrast by generating a phase difference by changing a refraction index of light by inserting a plurality of microscopic glass beads in predetermined positions of an inside of a lens main body so that visibility is not impaired.

Further, described here for reference, a lens may be used, which reduces contrast by generating a phase difference by changing a refraction index of light in a predetermined position or partially changing a light-shielding rate, by partially changing optical characteristics, with respect to a lens main body using a material the optical characteristics of which change.

The present invention is described with reference to the examples and the modified examples thus far, the technical range of the present invention is not limited to the ranges of the descriptions of the above described examples and modified examples. It is obvious to a person skilled in the art that various changes or alterations can be added to the above described examples and modified examples within the scope of the claims.

Reference Signs List

100 Eyeglasses

110 Lens

300 Contact lens

400 Scope optical system

**Claims**

1. An accommodation assisting lens (110), comprising:

   a lens main body; and
   dots that are isotropically and uniformly disposed in the lens main body,
   wherein in a visible light region, a difference in average transmittance between a dot portion based on the dots, and a non-dot portion other than the dot portion is 2% to 50% inclusive, and the average transmittance in the dot portion is higher than in the non-dot portion,
   **characterized in that**
   a pattern forming the non-dot portion is a coloring matter pattern composed of a metal, and
   wherein the difference in the average transmittance is produced by the coloring matter pattern.

2. The accommodation assisting lens according to claim 1, wherein the metal is a chrome, an aluminum, a gold, or a silver in the coloring matter pattern composed of the metal.

3. The accommodation assisting lens according to claim 1 or claim 2,
   wherein a difference in average transmittance between the dot portion and the non-dot portion in a predetermined region in the visible light region is larger than a difference in average transmittance between the dot portion and the non-dot portion in a region other than the predetermined region in the visible light region.

4. The accommodation assisting lens according to claim 3,
   wherein the predetermined region includes at least a blue wavelength region.

5. The accommodation assisting lens according to claim 1,
   wherein the dot portion and the non-dot portion have an optical phase difference $\phi$.

6. The accommodation assisting lens according to claim 5,
   wherein the phase difference $\phi$ satisfies $0<\phi\leq\pi/4$, with respect to a wavelength of 546 nm.

7. The accommodation assisting lens according to claim 6,
   wherein the phase difference $\phi$ satisfies $\pi/5<\phi\leq\pi/4$, with respect to the wavelength of 546 nm.

8. The accommodation assisting lens according to claim 1, further comprising a hard coat layer.

9. The accommodation assisting lens according to claim 1, further comprising an anti-reflection film pattern,
   wherein the difference in the average transmittance is formed by using the anti-reflection film pattern and the coloring matter pattern.

10. The accommodation assisting lens according to claim 9, wherein-a zirconium dioxide is stacked on a silicon dioxide in the anti-reflection film pattern.

11. The accommodation assisting lens according to claim 5,
    wherein the phase difference is formed by cutting a surface of the lens main body, or formed with the lens main body by using a die or a nanoimprinting technique.

12. The accommodation assisting lens according to claim 5, further comprising:

    a mechanism that produces the phase difference or the difference in the average transmittance,
    wherein the mechanism is formed of a film, and the film is provided on a surface of the lens main body or an inside of the lens main body.

13. An eyewear (100), comprising:

the accommodation assisting lens according to any one of claims 1 to 12; and
a frame supporting the accommodation assisting lens.

14. A contact lens (300) that is the accommodation assisting lens according to any one of claims 1 to 12.

15. A scope optical system (400) comprising the accommodation assisting lens according to any one of claims 1 to 12.

**Patentansprüche**

1. Akkommodationshilfslinse (110), umfassend:

   einen Linsenhauptkörper; und
   Punkte, die isotrop und gleichmäßig verteilt in dem Linsenhauptkörper angeordnet sind,
   wobei ein Unterschied in der mittleren Durchlässigkeit in einem Bereich sichtbaren Lichts zwischen einem Punktabschnitt basierend auf den Punkten und einem Nicht-Punktabschnitt, der nicht der Punktabschnitt ist, einschließlich 2 % bis einschließlich 50 % beträgt, und die mittlere Durchlässigkeit in dem Punktabschnitt höher ist als in dem Nicht-Punktabschnitt, **dadurch gekennzeichnet, dass**
   eine Struktur, die den Nicht-Punktabschnitt ausbildet, eine Farbmaterialstruktur ist, die aus einem Metall besteht, und
   wobei der Unterschied in der mittleren Durchlässigkeit durch die Farbmaterialstruktur erzeugt wird.

2. Akkommodationshilfslinse nach Anspruch 1, wobei das Metall Chrom, Aluminium, Gold oder Silber in der Farbmaterialstruktur, die aus dem Metall besteht, ist.

3. Akkommodationshilfslinse nach Anspruch 1 oder Anspruch 2,
   wobei ein Unterschied in der mittleren Durchlässigkeit zwischen dem Punktabschnitt und dem Nicht-Punktabschnitt in einem vorbestimmten Bereich in dem Bereich sichtbaren Lichts größer ist als ein Unterschied in der mittleren Durchlässigkeit zwischen dem Punktabschnitt und dem Nicht-Punktabschnitt in einem Bereich, der nicht der vorbestimmte Bereich in dem Bereich sichtbaren Lichts ist.

4. Akkommodationshilfslinse nach Anspruch 3, wobei der vorbestimmte Bereich zumindest einen Bereich blauer Wellenlänge umfasst.

5. Akkommodationshilfslinse nach Anspruch 1, wobei der Punktabschnitt und der Nicht-Punktabschnitt einen optischen Phasenunterschied $\phi$ aufweisen.

6. Akkommodationshilfslinse nach Anspruch 5, wobei der Phasenunterschied $\phi$ $0 < \phi \leq \pi/4$ erfüllt, bezogen auf eine Wellenlänge von 546 nm.

7. Akkommodationshilfslinse nach Anspruch 6, wobei der Phasenunterschied $\phi$ $\pi/5 < \phi \leq \pi/4$ erfüllt, bezogen auf die Wellenlänge von 546 nm.

8. Akkommodationshilfslinse nach Anspruch 1, die ferner eine harte Außenschicht umfasst.

9. Akkommodationshilfslinse nach Anspruch 1, die ferner eine Anti-Reflexionsfolienstruktur umfasst, wobei der Unterschied in der mittleren Durchlässigkeit unter Verwendung der Anti-Reflexionsfolienstruktur und der Farbmaterialstruktur ausgebildet ist.

10. Akkommodationshilfslinse nach Anspruch 9, wobei ein Zirconiumdioxid auf einem Siliciumdioxid in der Anti-Reflexionsfolienstruktur gestapelt ist.

11. Akkommodationshilfslinse nach Anspruch 5, wobei der Phasenunterschied durch Schneiden einer Oberfläche des Linsenhauptkörpers ausgebildet ist oder mit dem Linsenhauptkörper unter Verwendung einer Form oder eines Nanoaufdruckverfahrens ausgebildet ist.

12. Akkommodationshilfslinse nach Anspruch 5, die ferner Folgendes umfasst:

einen Mechanismus, der den Phasenunterschied oder den Unterschied in der mittleren Durchlässigkeit erzeugt, wobei der Mechanismus aus einer Folie ausgebildet ist und die Folie auf einer Oberfläche des Linsenhauptkörpers oder einer Innenseite des Linsenhauptkörpers bereitgestellt ist.

13. Brille (100), umfassend:

eine Akkommodationshilfslinse nach einem der Ansprüche 1 bis 12; und
einen Rahmen, der die Akkommodationshilfslinse trägt.

14. Kontaktlinse (300), die eine Akkommodationshilfslinse nach einem der Ansprüche 1 bis 12 ist.

15. Optisches Betrachtungssystem (400), umfassend eine Akkommodationshilfslinse nach einem der Ansprüche 1 bis 12.

**Revendications**

1. Lentille d'aide à l'accommodation (110), comprenant :

un corps principal de lentille ; et
des points qui sont disposés de manière isotrope et uniforme dans le corps principal de lentille,
dans laquelle dans une région de lumière visible, une différence de transmittance moyenne entre une partie de points basée sur les points, et une partie sans point autre que la partie de points est de 2 % à 50 % inclus, et la transmittance moyenne dans la partie de points est supérieure à celle dans la partie sans point,
**caractérisée en ce que**
un motif formant la partie sans point est un motif de matière colorante composé d'un métal, et dans laquelle la différence dans la transmittance moyenne est produite par le motif de matière colorante.

2. Lentille d'aide à l'accommodation selon la revendication 1, dans laquelle le métal est du chrome, de l'aluminium, de l'or ou de l'argent dans le motif de matière colorante composé du métal.

3. Lentille d'aide à l'accommodation selon la revendication 1 ou la revendication 2,
dans laquelle une différence de transmittance moyenne entre la partie de points et la partie sans point dans une région prédéterminée dans la région de lumière visible est supérieure à une différence de transmittance moyenne entre la partie de points et la partie sans point dans une région autre que la région prédéterminée dans la région de lumière visible.

4. Lentille d'aide à l'accommodation selon la revendication 3,
dans laquelle la région prédéterminée inclut au moins une région de longueur d'onde bleue.

5. Lentille d'aide à l'accommodation selon la revendication 1,
dans laquelle la partie de points et la partie sans point présentent une différence de phase optique $\Phi$.

6. Lentille d'aide à l'accommodation selon la revendication 5,
dans laquelle la différence de phase $\Phi$ satisfait à $0 < \Phi \leq \pi/4$, par rapport à une longueur d'onde de 546 nm.

7. Lentille d'aide à l'accommodation selon la revendication 6,
dans laquelle la différence de phase $\Phi$ satisfait $\pi/5 < \Phi \leq \pi/4$, par rapport à la longueur d'onde de 546 nm.

8. Lentille d'aide à l'accommodation selon la revendication 1, comprenant en outre une couche de revêtement dur.

9. Lentille d'aide à l'accommodation selon la revendication 1, comprenant en outre un motif de film antireflet,
dans laquelle la différence dans la transmittance moyenne est formée en utilisant le motif de film antireflet et le motif de matière colorante.

10. Lentille d'aide à l'accommodation selon la revendication 9,
dans laquelle du dioxyde de zirconium est empilé sur un dioxyde de silicium dans le motif de film antireflet.

**11.** Lentille d'aide à l'accommodation selon la revendication 5,
dans laquelle la différence de phase est formée en découpant une surface du corps principal de lentille, ou formée avec le corps principal de lentille en utilisant une matrice ou une technique de nano-impression.

**12.** Lentille d'aide à l'accommodation selon la revendication 5, comprenant en outre :

un mécanisme qui produit la différence de phase ou la différence dans la transmittance moyenne,
dans laquelle le mécanisme est formé d'un film, et le film est prévu sur une surface du corps principal de lentille ou à l'intérieur du corps principal de lentille.

**13.** Lunettes (100), comprenant :

la lentille d'aide à l'accommodation selon l'une quelconque des revendications 1 à 12 ; et
une monture supportant la lentille d'aide à l'accommodation.

**14.** Lentille de contact (300) qui est la lentille d'aide à l'accommodation selon l'une quelconque des revendications 1 à 12.

**15.** Système optique d'endoscope (400) comprenant la lentille d'aide à l'accommodation selon l'une quelconque des revendications 1 à 12.

EP 3 255 477 B1

## Fig. 1

ART RELAXATION(NEAR→FAR)

ART TENSION(FAR→NEAR)

(A)

(B)

Fig. 2

Fig. 3

# Fig. 4

**CONTRAST-DEFOCUS AMOUNT**

REDUCTION IN CONTRAST

Y-axis: CONTRAST (0, 0.2, 0.4, 0.6, 0.8, 1)

X-axis: DEFOCUS AMOUNT[mm] (-50, -40, -30, -20, -10, 0, 10, 20, 30, 40, 50)

Fig. 5

Fig. 6

| | z=0mm | z=50mm |
|---|---|---|
| Ref φ=0 | | |
| φ= π/4 | | |
| φ= π/2 | | |

# Fig. 7

CONTRAST-DEFOCUS AMOUNT(6.6cpd)

Fig. 8

SECTION

# Fig. 9

EP 3 255 477 B1

# Fig. 10

$\phi=0$

$\phi=\pi/5$

(A)

(B)

EP 3 255 477 B1

# Fig. 11

ACCOMMODATION TIME RATIO VS CONTRAST

Fig. 12

ACCOMMODATION TIME RATIO VS WITH OR WITHOUT HONEYCOMB

## Fig. 13

| DESIGN PARAMETER | RELATION WITH CONTRAST |
|---|---|
| HIGH-REFRACTIVE AREA OCCUPATION RATE | |
| PHASE DIFFERENCE (THICKNESS OF HIGH-REFRACTIVE INDEX LAYER) | |
| PITCH WIDTH | |
| SHAPE | ALL REDUCE CONTRAST |

Fig. 14

Fig. 15

Fig. 16

EP 3 255 477 B1

## Fig. 17

| | DIFFERENCE IN VISIBLE LIGHT TRANSMITTANCE | NEAR VISION AVERAGE INCREASE VALUE (N=10) | NEAR VISION EFFECT EXPRESSOR (N=10) | LONG-TIME USE EVALUATION SUBJECTIVE EVALUATION TO EYE FATIGUE (N=10) |
|---|---|---|---|---|
| LENS A | 2.4% | 0.14 | 75% | 1 |
| LENS B | 0.5% | 0.11 | 60% | 3 |
| LENS C | 1.8% | 0.11 | 60% | 2 |

Fig. 18

| LAYER | MATERIAL | MEMBRANE THICKNESS (PHASE DIFFERENCE 1/4π) | |
|---|---|---|---|
| | | NON-DOT PORTION | DOT PORTION |
| PHASE DIFFERENCE LAYER | ZrO2 | 29.8 | 0 |
| AR LAYER | SiO2 | 26.0 | 26.0 |
| | ZrO2 | 7.4 | 7.4 |
| | SiO2 | 171.3 | 171.3 |
| | ZrO2 | 29.2 | 29.2 |
| | SiO2 | 26.6 | 26.6 |
| | ZrO2 | 49.4 | 49.4 |
| | SiO2 | 93.2 | 93.2 |

# Fig. 19

(A)

(B)

Fig. 20

Fig. 21

100

170
122   128   120

130

132

110

Z
Y

# Fig. 22

(A)

(B)

(C)

(D)

Fig. 23

300

EP 3 255 477 B1

Fig. 24

400

39

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000249902 A
- JP 3144374 U
- WO 0007064 A1
- JP 2013210450 A
- EP 2455799 A1
- US 4989967 A
- JP 2000047147 A
- JP 2002122826 A
- JP 2013134383 A
- JP 2002214570 A
- JP 2008524645 A
- KR 20130011788 A